# EUROPÄISCHE PATENTSCHRIFT

(11) **EP 1 939 053 B1**
(45) Veröffentlichungstag und Bekanntmachung des Hinweises auf die Patenterteilung: **14.09.2011**
(21) Anmeldenummer: 07021858.1
(22) Anmeldetag: 10.11.2007
(51) Int. Cl.: B60R 22/24

(54) **Befestigungsanordnung, insbesondere zum Halten eines Umlenkbeschlags für einen Gurtbandabschnitt eines Sicherheitsgurtes in einem Fahrzeug, sowie Verfahren zum Befestigen eines Umlenkbeschlags an einer Trägerwand**
Attachment assembly, particularly for holding loop-around fittings for a seat belt strap in a vehicle, and method for attaching loop-around fittings to a holding wall
Agencement de fixation, en particulier pour fixer une ferrure de déviation pour une section de sangle d'une ceinture de sécurité dans un véhicule, ainsi que procédé de fixation d'une ferrure de déviation sur une paroi porteuse

(30) Priorität: 27.12.2006 DE 102006061617
(43) Veröffentlichungstag der Anmeldung: 02.07.2008
(73) Patentinhaber: Volkswagen Aktiengesellschaft, 38436 Wolfsburg (DE)
(72) Erfinder: Bergs, Andreas, 38518 Gifhorn (DE)

(56) Entgegenhaltungen:
- WO-A-03/070510
- WO-A-2006/129112
- US-A1- 2004 080 194
- US-A1- 2004 080 195

## Beschreibung

Die Erfindung betrifft eine Befestigungsanordnung, insbesondere zum Halten eines Umlenkbeschlags für einen Gurtbandabschnitt eines Sicherheitsgurtes in einem Fahrzeug, nach dem Oberbegriff des Patentanspruchs 1 sowie je ein Verfahren zum Befestigen zweier Ausführungsformen von Umlenkbeschlägen an einer Trägerwand nach den Patentansprüchen 19 und 20.

Aus der DE 100 51 014 C1 ist eine Befestigungsanordnung für einen Umlenkbeschlag eines Sicherheitsgurtsystems bekannt, bei der die Fahrzeugsäule oder ein mit ihr verbundenes Halteblech eine Öffnung zum Einstecken eines flachen und an seinem Einsteckende T-förmig ausgebildeten Trägerteils aufweist. Das separate Trägerteil nimmt den Beschlag auf, so dass nicht der Beschlag selbst, sondern nur das Trägerteil in die Fahrzeugsäule bzw. das Halteblech eingesteckt ist. Der Beschlag ist mittels eines Federelements an dem Trägerteil verspannt.

Ferner ist aus der US 2004/0080195 A1 ein Halteelement zur Befestigung eines Kindersicherheitssitzes an einem Fahrzeugsitz bekannt. Das Befestigungselement ist dabei als ein Drahtbügel ausgebildet, wobei die jeweiligen Arme des Drahtbügels in einem Teilbereich mittels offener Kanäle bildender Aufnahmemittel befestigt sind.

Die Aufgabe der Erfindung besteht darin, eine Führung für Gurte bereitzustellen, bei der eine sichere Befestigung des Umlenkbeschlags mit einfachen Mitteln erfolgen kann.

Die Aufgabe ist durch die Merkmale des Patentanspruchs 1 gelöst. Vorteilhafte Weiterbildungen der Erfindung sind in den Unteransprüchen offenbart.

Gemäß dem Patentanspruch 1 ist der Umlenkbeschlag zur Bildung eines Teils des Haltemittels zum Hintergreifen der Trägerwand mit zumindest einem Bügelschenkel ausgebildet. Der Bügelschenkel ist im Sinne einer Bauteilreduzierung materialeinheitlich und einstündig mit dem Umlenkbeschlag ausgebildet. Da erfindungsgemäß der Umlenkbeschlag selbst die Trägerwand hintergreift, können gesonderte Verbindungsstücke und auch Verschraubungen entfallen. Durch den Wegfall aufwendiger Verbindungsstücke oder Schrauben sind im Sinne einer Teilezahlreduzierung die Herstellkosten geringer. Andererseits wird durch eine besondere Anordnung des Umlenkbeschlags unmittelbar an der Trägerwand die Sicherheit der Verbindung von Umlenkbeschlag zu Trägerwand erhöht. Die Montagezeit wird verringert und die Montagesicherheit erhöht.

Der Umlenkbeschlag ist als eine die Trägerwand hintergreifende Bügelschlaufe ausgebildet. Die Bügelschlaufe besteht aus einem langgestreckten ringförmigen bzw. ovalen Schlaufenabschnitt. Der Schlaufenabschnitt weist in einem auskragenden Bereich einen gerade verlaufenden Steg auf, über den ein Gurtabschnitt beispielsweise eines Sicherheitsgurtes in einem Fahrzeug zu seiner Umlenkung anliegt. Der Schlaufenabschnitt kann geschlossen ausgebildet sein, wobei an den geschlossenen Schlaufenabschnitt sich ein Bügelschenkelabschnitt anschließt, der in die Trägerwand einsteckbar ist. Ist der Schlaufenabschnitt geschlossen ausgebildet, ist es jedoch nötig, ein Ende des Gurtes vor der Montage in den geschlossenen Schlaufenabschnitt einzufädeln.

Deshalb ist der Umlenkbeschlag als offene Bügelschlaufe mit zwei die Trägerwand hintergreifenden Bügelschenkeln ausgebildet. Indem die Bügelschlaufe offen ausgebildet ist, kann ein bereits vormontierter Gurt mit einem mittleren Gurtabschnitt seitlich in den Schlaufenabschnitt eingeschoben werden. Dazu wird der Gurtabschnitt zwischen die beiden Bügelschenkeln eingeführt, bis der Gurtabschnitt innerhalb der Bügelschlaufe liegt. Eine offene Bügelschlaufe hat den Vorteil, dass der Umlenkbeschlag nachträglich montiert oder demontiert werden kann, wenn das komplette Gurtsystem z.B. mit Gurt und Aufroller bereits fahrzeugseitig vormontiert ist. Es ist dabei nicht mehr erforderlich, dass ein Ende des Gurtes in die Bügelschlaufe eingefädelt wird.

In einer Ausgestaltung der Erfindung weist der Umlenkbeschlag mindestens einen Federabschnitt auf, durch den die Bügelschenkel in einer die Trägerwand hintergreifenden Montageposition gegen Lösen gesichert sind. Hierzu besitzt der Umlenkbeschlag zwei gegenüberliegende, die Federabschnitte aufweisende Bügelschenkel, wobei jeder Federabschnitt einen sich an der Trägerwand abstützenden Rastvorsprung trägt.

Neben dem Lagesicheren Halten des Umlenkbeschlags an der Trägerwand ist es erforderlich, dass der Umlenkbeschlag nicht in unzulässiger Weise entfernt werden kann oder sich unbeabsichtigt löst. Bisher wurden dazu feste Verschraubungen mit Sicherheitsschrauben verwendet, die ein einfaches Lösen des Umlenkbeschlags ohne Werkzeug verhindert haben. Mit der Verwendung eines erfindungsgemäßen Federabschnitts wird ein Lösen des Umlenkbeschlags auch ohne besondere Verschraubung zuverlässig verhindert. Die Federabschnitte können vorzugsweise eine Federsteifigkeit aufweisen, die ein Lösen nur mit Werkzeug gestatten. Neben der Funktion als Sicherung gegen Lösen erfüllt der Federabschnitt auch die Funktion einer Einrichtung gegen Klappern. Da die Bügelschenkel unmittelbar in die Trägerwand eingesetzt sind und sowohl Umlenkbeschlag als auch Trägerwand aus Festigkeitsgründen aus Metall hergestellt sind, besteht die Gefahr dass die Teile aneinander schlagen und Klappergeräusche verursachen. Durch eine gegenseitige Federvorspannung von Umlenkbeschlag und Trägerwand ist ein Klappern zuverlässig verhindert.

In der ersten alternativen Ausführungsform der Erfindung können die Rastvorsprünge einteilig mit dem Umlenkbeschlag ausgebildet sein. In dem die Federabschnitte bzw. die Rastvorsprünge einteilig in die Bügelschenkel integriert sind, entfällt ein gesondertes Federteil. Die Befestigungsanordnung kann folglich im Sinne der Teilereduzierung kostengünstiger hergestellt und in kürzerer Zeit montiert werden.

Dem gemäß können die Rastvorsprünge von Biegeabschnitten des Bügelschenkels gebildet werden. Obwohl es möglich ist gesonderte Rastvorsprünge an den Bügelschenkeln zu befestigen, ist es von Vorteil die Rastvorsprünge unmittelbar aus dem Material für die Bügelschenkel herzustellen. Die Bügelschenkel sind zusammen mit der Bügelschlaufe in vorteilhafter Weise aus einem einzigen Stahldraht gebogen hergestellt.

So können die Rastvorsprünge in einfacher Weise durch Biegeabschnitte des Bügelschenkels gebildet werden, in dem der Stahldraht im Bereich der Bügelschenkel kurvenförmig gebogen wird, so dass zwei gegenüberliegende knieartig vorstehende Rastvorsprünge gebildet werden. In vorteilhafter Weise sind dazu die Rastvorsprünge an zwei gegenüberliegenden voneinander weg weisenden Biegeabschnitten des Bügelschenkels ausgebildet.

Gemäß der ersten alternativen Ausführungsform der Erfindung können die Biegeabschnitte des Bügelschenkels zur Bildung einer Einführhilfe Einführschrägen aufweisen, welche zum Auslenken der Federabschnitte in ein Lage ausgebildet sind, in der die Rastvorsprünge in einen Montageschlitz einer Ausstellung der Trägerwand einführbar sind. In einer Einführposition des Umlenkbeschlags sind die Federabschnitte der Bügelschenkel entspannt und beide Endabschnitte können spannungsfrei in den oberen Montageschlitz der Ausstellung eingeführt werden, bis die Einführschrägen an der Oberkante der Ausstellung anstehen. Der Umlenkbeschlag wird dabei mit den freien Enden seiner Bügelschenkel von oben in einen Montageschlitz zwischen der Trägerwand und einer Ausstellung eingeschoben. Ein Einschieben des Umlenkbeschlags ist ohne besonderen Kraftaufwand bis zu einer Position möglich, in der die Rastvorsprünge aufgrund ihrer Knieweite an der oberen Kante der Ausstellung anstehen. Um den Umlenkbeschlag vollständig bis zu seiner entgültigen Montageposition einschieben zu können, müssen die Rastvorsprünge entgegen der Federspannung der Federabschnitte zusammengedrückt werden, bis die Kniebreite der Rastvorsprünge zumindest geringfügig kleiner ist als die Breite des Montageschlitzes. Die Federabschnitte können mittels eines gesonderten Werkzeugs während der Montage zusammengedrückt werden. Um auf gesonderte Werkzeuge verzichten zu können, sind die erfindungsgemäßen Einführschrägen so angeordnet, dass durch verstärktes Drücken bzw. Schlagen des Umlenkbeschlags nach unten die Federabschnitte selbsttätig aufgrund der Kraft in Einführrichtung zusammengedrückt werden, bis die Rastvorsprünge in den Montageschlitz eindringen. Die Rastvorsprünge gleiten dann zwischen Trägerwand aus Ausstellung entlang eines Übergangsbereichs nach unten, bis sie an einem unteren Montageschlitz wieder zwischen Trägerwand und Ausstellung hervortreten. Die Übergangsbereiche zwischen Trägerwand aus Ausstellung sind durch Umformung des Blechmaterials der Trägerwand hergestellt und verbinden die Trägerwand mit der Ausstellung in einer einteiligen Ausgestaltung. Alternativ kann die Ausstellung auch als gesondertes Blechteil hergestellt und beispielsweise durch Schweißen an der Trägerwand befestigt sein.

Vorzugsweise sind diese Biegeabschnitte zu ihrer Abstützung an einer Ausstellung der Trägerwand ausgebildet. In der entgültigen Montageposition sind die Rastvorsprünge aus dem unteren Montageschlitz wieder zwischen Trägerwand und Ausstellung hervorgetreten und die Biegeabschnitte liegen auf Grund der Federabschnitte unter Vorspannung an der Ausstellung der Trägerwand an und stützen sich gegen die Trägerwand ab. Durch diese verspannten Lage wird auch ein Klappern des Umlenkbeschlags an der Trägerwand zuverlässig verhindert.

Wird der Umlenkbeschlag aus seiner Montageposition nach oben herausgezogen, so stehen die Rastvorsprünge an der Unterkante des unteren Montageschlitzes an und der Umlenkbeschlag kann nicht aus der Ausstellung herausgleiten. Die Federsteifigkeit der Federabschnitte ist so ausgelegt, dass bei allen im Betrieb auftretenden Kräften die Federkräfte der Federabschnitte nicht überwunden werden können. Gleichwohl ist die Federsteifigkeit der Federabschnitte so bemessen, dass der Umlenkbeschlag durch zusammendrücken der Bügelschenkel vorzugsweise mit einem geeigneten Werkzeug so weit zusammengedrückt werden kann, dass die Weite der Rastvorsprünge kleiner als die Öffnungsbreite der Montageschlitze wird und der Umlenkbeschlag herausgezogen werden kann.

Ein erfindungsgemäßes Verfahren zum Befestigen eines Umlenkbeschlags nach der ersten alternativen Ausgestaltung der Erfindung sieht die folgenden Schritte vor.

Eine Ausstellung wird in einer Trägerwand hergestellt. Anschließend werden Biegeabschnitte von Bügelschenkeln eines Umlenkbeschlags in einen durch die Ausstellung gebildeten Montageschlitz der Trägerwand eingeführt. Dabei werden Federabschnitte der Bügelschenkel in eine Lage ausgelenkt, in der Rastvorsprünge des Umlenkbeschlags in die Ausstellung eingeschoben werden können, bis die Rastvorsprünge in einer Montageposition an der Ausstellung verrasten.

Die Rastvorsprünge können in einer zweiten alternativen Ausführungsform der Erfindung zweiteilig mit dem Umlenkbeschlag ausgebildet sein. Wie bereits erläutert müssen die Rastvorsprünge nicht notwendiger Weise einteilig mit dem Umlenkbeschlag ausgebildet sein, um dem erfindungsgemäßen Grundgedanken Rechnung zu tragen. In einer zweiten Ausführungsform der Erfindung sind deshalb die Rastvorsprünge als gesonderte, von dem Umlenkbeschlag separate Teile ausgebildet. Dies hat den Vorteil, dass der Umlenkbeschlag einfacher ausgestaltet und damit kostengünstiger hergestellt werden kann. Dabei sind die Rastvorsprünge vorzugsweise an Kulissensteinen vorgesehen und jeweils ein Kulissenstein ist an einem der Bügelschenkel des Umlenkbeschlags gehalten.

In einer vorteilhaften Variante der zweiten Ausgestaltung sind die Rastvorsprünge über Federabschnitte bildende Federzungen mit den Kulissensteinen verbunden. In dem die Federabschnitte nicht an dem Umlenkbeschlag selbst vorgesehen sind, sondern an dem gesonderten Kulissenstein ausgebildet sind, kann die Federsteifigkeit der Federabschnitte unabhängig der Materialeigenschaften für den Umlenkbeschlag gewählt werden. Dies hat den Vorteil, dass die der verbesserten Sicherung dienenden Federabschnitte in ihren Federsteifigkeiten anforderungsgerecht und maßgeschneidert an die Einbauerfordernisse angepasst werden können, ohne Rücksicht auf die Materialeigenschaften des Umlenkbeschlags nehmen zu müssen.

Jeder Rastvorsprung kann zusammen mit einer Federzunge und einem Kulissenstein als einteiliges Kunststoffteil ausgebildet sein. Die Kulissensteine sind aus einem den funktionsgemäßen Festigkeitsanforderungen genügenden Kunststoff hergestellt. Aufgrund der vielfältig angebotenen Arten von Kunststoffmaterialien kann anforderungsgerecht diejenige Kunststoffmaterialart ausgewählt werden, deren Federsteifigkeit für die erfindungsgemäße Funktion am besten geeignet ist. Zudem können die Kulissensteine durch ihre Ausbildung als einteilige Kunststoffteile kostengünstig hergestellt werden.

In einer vorteilhaften Ausgestaltung weist jeder Kulissenstein zu seiner Halterung an dem Bügelschenkel des Umlenkbeschlags eine Haltebuchse auf, welche zum Einstecken eines Bügelschenkels des Umlenkbeschlags ausgebildet ist. Durch die Haltebuchsen wird eine sichere Lagerung des Umlenkbeschlags an dem jeweiligen Kulissenstein gewährleistet.

Der Kulissenstein kann Haltenuten zum Eingreifen von Randabschnitten einer Montageöffnung der Trägerwand in einer Montageposition des Umlenkbeschlags aufweisen. Neben anderen Befestigungsmitteln, die geeignet sein können, den Kulissenstein an der Trägerwand zu halten, sind erfindungsgemäß vorzugsweise Haltenuten an dem Kulissenstein vorzusehen, in die in der entgültigen Montageposition Randabschnitte der Montageöffnung der Trägerwand eingreifen. Die Tiefe sowie die Breite der Haltenuten ist an die Blechdicke der Trägerwand und an die Anforderung an eine ausreißsicher Befestigung des Umlenkbeschlags an der Trägerwand abgestimmt auszuwählen.

Eine zur Erfindung gehörende Montageöffnung weist einen ersten Teilausschnitt auf, durch den der Kulissenstein zusammen mit dem hintergreifenden Bügelschenkel des Umlenkbeschlags einführbar ist und einen zweiten Teilausschnitt aufweist, an dessen Randabschnitte der Kulissenstein in einer Montageposition des Umlenkbeschlags gehalten ist, in welcher Montageposition der Bügelschenkel des Umlenkbeschlags die Trägerwand hintergreift. Die Trägerwand ist dabei derart steif ausgebildet, dass sie nicht nur die in der Verwendung üblicher Weise entstehenden Gurtkräfte, sondern auch außergewöhnlich große Gurtkräfte, wie sie beispielsweise bei einem Unfall auftreten, vollständig aufnimmt.

Vorzugsweise kann der erste Teilausschnitt eine Form aufweisen, deren Höhe mindestens dem Kulissenstein entspricht und deren Breite mindestens die Breite des Kulissensteins, insbesondere zusammen mit einem überstehenden Endstück des Bügelschenkels aufweist, und der zweite Teilausschnitt, der unmittelbar an den ersten Teilausschnitt anschließt, eine Form aufweist, deren Breite an den Nutengrund der Haltenuten des Kulissensteins angepasst ist. Durch diese erfindungsgemäße Gestalt der Montageöffnung kann der Umlenkbeschlag gemäß der zweiten alternativen Ausführungsform gemäß dem im Folgenden beschriebenen Verfahren montiert werden.

Dieses zweite Verfahren zum Befestigen eines Umlenkbeschlags nach der zweiten alternativen Ausgestaltung der Erfindung sieht die folgenden Schritte vor.

Zwei Montageöffnungen werden mit jeweils einem ersten Teilausschnitt und einem unmittelbar daran angrenzenden zweiten Teilausschnitt in einer Trägerwand hergestellt. Jeweils ein Kulissenstein wird an einem der zwei Bügelschenkel des Umlenkbeschlags aufgesteckt. Dann werden die beiden Kulissensteine in die ersten Teilausschnitte der zwei Montageöffnungen eingeführt. Anschließend werden die Kulissensteine aus dieser Einführposition an den ersten Teilausschnitten in die Montageposition an den zweiten Teilausschnitten geschoben, bis Randabschnitte der zweiten Teilausschnitte in Haltenuten der Kulissensteine eingreifen und Rastvorsprünge der Kulissensteine mittels Federzungen an der Trägerwand verrasten.

Nachfolgend sind zwei Ausführungsbeispiele der Erfindung anhand der beigefügten Figuren gezeigt.

Es zeigen:
- Fig. 1: in einer perspektivischen Ansicht eine erste Ausführungsform mit einem einteiligen Umlenkbeschlag im montierten Zustand an einer Ausstellung einer Trägerwand;
- Fig. 2: in einer Querschnittansicht entlang der Linie I-I aus der Fig. 1 den Umlenkbeschlag in Höhe der Ausstellung;
- Fig. 3: in einer Längsschnittansicht der Linie II-II aus der Fig. 1 einen Bügelschenkel des Umlenkbeschlags;
- Fig. 4: in einer perspektivischen Ansicht eine zweite Ausführungsform mit einem Umlenkbeschlag und zwei Kulissensteinen in einem vormontierten Zustand;
- Fig. 5: in einer Draufsicht eine Montageöffnung in einem Ausbruch einer Trägerwand;
- Fig. 6: in einer Querschnittansicht entlang der Linie III-III aus der Fig. 4 einen Bügelschenkel des Umlenkbeschlags mit einem Kulissenstein im montierten Zustand;
- Fig. 7: in einer Querschnittansicht entlang der Linie IV-IV aus der Fig. 6 den Kulissenstein in einer Einführposition;
- Fig. 8: in einer Querschnittansicht entlang der Linie IV-IV aus der Fig. 6 den Kulissenstein in einer Montageposition;
- Fig. 9: in einer Querschnittansicht entlang der Linie V-V aus der Fig. 7 einen Rastvorsprung in der Einführposition des Kulissensteins; und
- Fig. 10: in einer Querschnittansicht entlang der Linie V-V aus der Fig. 8 den Rastvorsprung in der verrasteten Montageposition des Kulissensteins.

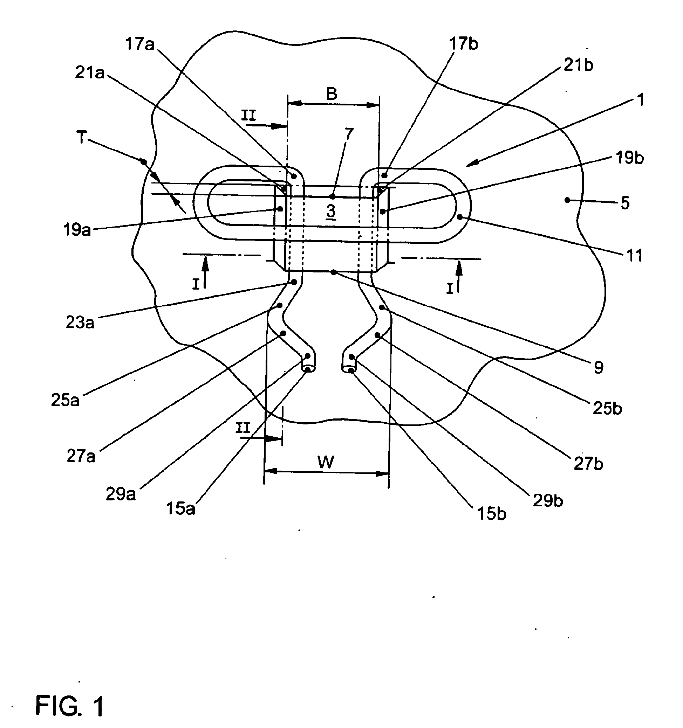

In der Fig. 1 ist die erste Ausführungsform einer erfindungsgemäßen Befestigungsanordnung gezeigt. In dieser ersten Ausführungsform ist ein Umlenkbeschlag 1 in eine Ausstellung 3 einer Trägerwand 5 eingesteckt. In der dargestellten Lage befindet sich der Umlenkbeschlag 1 in seiner funktionsgemäß vorgesehenen Montageposition. Die Trägerwand 5 ist Teil eines Rohbauteils einer Fahrzeugkarosserie. Die Ausstellung 3 ist ein vorstehender Wandabschnitt der Trägerwand 5, der durch Schneiden und Umformen aus der Ebene der Trägerwand 5 herausgestellt ist. Durch die Umformung der Trägerwand 5 in eine Ausstellung 3 wird ein oberer Montageschlitz 7 und ein unterer Montageschlitz 9 in der Trägerwand 5 gebildet. Der Umlenkbeschlag 1 ist in der Montageposition zwischen Ausstellung 3 und Trägerwand 5 eingesetzt.

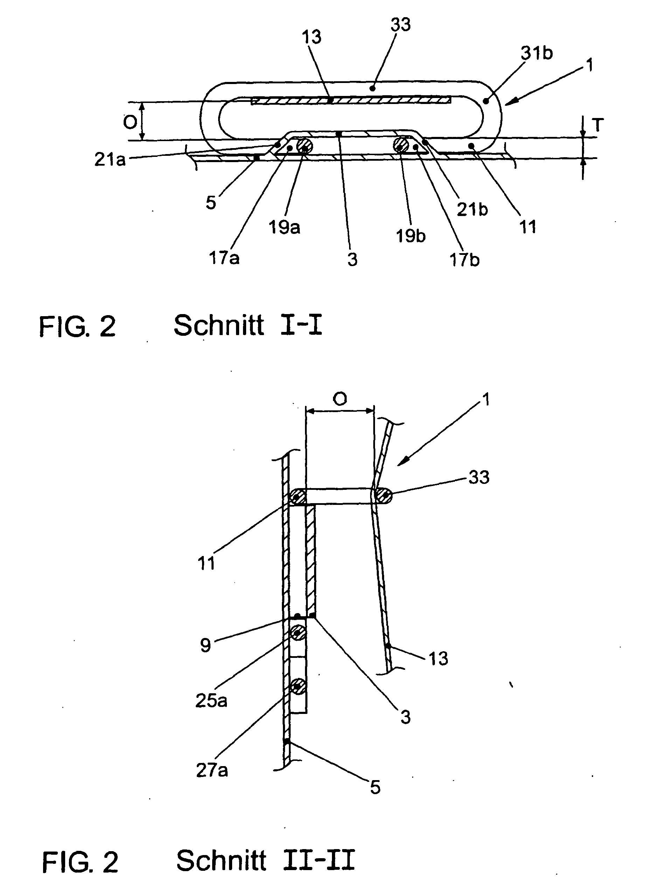

Der Umlenkbeschlag 1 ist aus einem Stahldraht hergestellt. An einem oberen Ende des Umlenkbeschlags 1 ist eine Führung zur Bildung einer Gurtumlenkung für einen Gurtbandabschnitt 13 (Fig. 2 und 3) ausgeformt. Die Ausformung bildet eine offene Bügelschlaufe 11. Die Bügelschlaufe 11 mündet an ihren beiden Drahtenden in zwei Bügelschenkel 15a und 15b. Im Wesentlichen weisen die beiden Bügelschenkel 15a und 15b in eine senkrechte Richtung zu einer Ebene in der sich die Bügelschlaufe 11 erstreckt. Ausgehend von der Ebene der Bügelschlaufe 11 beginnen die Bügelschenkel 15a und 15b mit jeweils einem 90°-Winkelabschnitt 17a und 17b. An die 90°-Winkelabschnitte 17a und 17b schließen sich gerade verlaufende Federabschnitte 19a und 19b an. Die Federabschnitte 19a und 19b dienen dazu, eine nötige Elastizität in den Bügelschenkeln 15a und 15b zu bringen, und halten den Umlenkbeschlag 1 an der Ausstellung 3 der Trägerwand 5. Dabei ist die Öffnungstiefe T des oberer Montageschlitzes 7 und des unteren Montageschlitzes 9 an den Drahtdurchmesser der Federabschnitte 19a und 19b angepasst. Die Öffnungsbreite B der Ausstellung 3 ist an das Außenmaß des Abstandes der beiden Federabschnitte 19a und 19b angepasst. In Abhängigkeit von Materialeigenschaften der Trägerwand 5, wie beispielsweise die Streckfestigkeit und die Blechdicke, verbleiben Übergangsbereiche 21a und 21b in dem oberen Montageschlitz 7 und dem unteren Montageschlitz 9 außenseitig der Öffnungsbreite B, in denen die Blechabschnitte der Trägerwand 5 in die Ausstellung 3 übergehen. In einem Abschnitt der Bügelschenkel 15a und 15b, der sich an die Federabschnitte 19a und 19b anschließt und unmittelbar nach dem Hervortreten der Bügelschenkel 15a und 15b aus dem unteren Montageschlitz 9 beginnt, sind die Bügelschenkel 15a und 15b über die Öffnungsbreite B hinaus nach außen gebogen.

Die nach außen gebogenen Biegeabschnitte 25a und 25b der Bügelschenkel 15a und 15b bilden Rastvorsprünge. Die Rastvorsprünge 25a und 25b verhindern ein selbständiges Lösen des Umlenkbeschlags 1 aus seiner Montageposition zwischen Trägerwand 5 und Ausstellung 3. Dazu erstrecken sich die Rastvorsprünge 25a und 25b von einander weg nach außen, derart, dass die Weite W der Rastvorsprünge 25a und 25b deutlich größer ist, als die Öffnungsbreite B des oberen Montageschlitzes 7 bzw. des unteren Montageschlitzes 9.

An die Rastvorsprünge 25a und 25b schließen sich nach innen gebogenen Abschnitte der Bügelschenkel 15a und 15b als Einführschrägen 27a und 27b an. An die Einführschrägen 27a und 27b schließen sich Endabschnitte 29a und 29b der Bügelschenkel 15a und 15b an. Die Endabschnitte 29a und 29b verlaufen parallel zueinander in einer Richtung der Längserstreckung der Bügelschenkel 15a und 15b. Die Endabschnitte 29a und 29b besitzen in einem entspannten Zustand der Federabschnitte 19a und 19b eine Breite, die kleiner als die Öffnungsbreite B des Montageschlitze 7 und 9 ist. Der Abstand der beiden Endabschnitte 29a und 29b ist so bemessen, dass sie mindestens soweit zusammengedrückt werden können, bis die Weite W der Rastvorsprünge 25a und 25b kleiner als die Öffnungsbreite B des Montageschlitze 7 und 9 ist.

In der Fig. 2 ist der Umlenkbeschlag 1 in Höhe der Ausstellung 3 im Querschnitt dargestellt. Der Querschnitt verläuft, wie in Fig. 1 gezeigt entlang der Schnittlinie I-I durch die Federabschnitte 19a und 19b des Umlenkbeschlags 1. Der aus einem Stahldraht gebogene Umlenkbeschlag 1 weist einen gleichmäßigen Kreisquerschnitt auf. Der Durchmesser des Kreisquerschnitts der Federabschnitte 19a und 19b entspricht der Öffnungstiefe T des dargestellten unteren Montageschlitzes 9. Die Öffnungstiefe T ist dabei der Betrag um den die Ausstellung 3 gegenüber der Ebene der Trägerwand 5 herausgestellt ist. Die Übergangsbereiche 21a und 21b werden durch einen flächigen Biegeabschnitt der Ausstellung 3 gebildet. Diese Übergangsbereiche 21a und 21b sind durch Umformung des Blechmaterials des Trägerwand 5 hergestellt und verbinden die Trägerwand 5 mit der Ausstellung 3 in einer einteiligen Ausgestaltung. In der Fig. 2 ist die Bügelschlaufe 11 des Umlenkbeschlags 1 in einer Draufsicht von unten dargestellt. Die Bügelschlaufe 11 wird von einem Abschnitt des aus Stahldraht hergestellten Umlenkbeschlags 1 gebildet. Dazu führen zwei Drahtabschnitte von den Enden der Federabschnitte 19a und 19b über die 90°-Winkelabschnitte 17a und 17b in entgegengesetzte Richtungen voneinander weg nach außen. Diese Drahtabschnitte gehen dann in U-förmige Bogenabschnitte 31a und 31b über. Die U-förmigen Bogenabschnitte 31a und 31b besitzen einen Biegeradius, der weitgehend von dem Durchmesser und der Materialart des Drahtes für den Umlenkbeschlag 1 abhängig ist. In jedem Fall wird über die U-förmigen Bogenabschnitte 31a und 31b eine Öffnungsweite O der Bügelschlaufe 11 geschaffen, die ausreichend groß ist, um den Gurtbandabschnitt 13 eines Sicherheitsgurtes hindurchführen zu können. Die beiden U-förmigen Bogenabschnitte 31a und 31b laufen anschließend aufeinander zu und vereinigen sich in einem geraden Umlenkabschnitt 33 über den der Gurtbandabschnitt 13 des Sicherheitsgurtes geführt ist.

In Fig. 3 ist die Einbausituation aus Fig. 1 in einer Längsschnittansicht entlang der Schnittlinie II-II gezeigt. Der Umlenkbeschlag 1 ist dabei im Querschnitt dargestellt. Der Umlenkabschnitt 33 des Umlenkbeschlags 1 weist den einheitlich kreisförmigen Querschnitt auf. Über den Umlenkabschnitt 33 des Umlenkbeschlags 1 ist der Gurtbandabschnitt 13 des Sicherheitsgurtes geführt. Der Abstand zwischen dem kreisförmigen Querschnitt des Umlenkabschnitts 33 und dem in Fig. 3 dargestellten Querschnitt der Bügelschlaufe 11 bildet die Öffnungsweite O der Bügelschlaufe 11. Diese Öffnungsweite O der Bügelschlaufe 11 ist abgestimmt auf den gewünschten Lageabstand des Gurtbandabschnittes 13 bezüglich der Trägerwand 5 bzw. der Ausstellung 3. Die Ebene der Bügelschlaufe 11 verläuft in einem rechten Winkel zu der Ebene der Trägerwand 5 und den Bügelschenkeln 15a, 15b des Umlenkbeschlags 1. Der Bügelschenkel 15a ist in Fig. 3 im Querschnitt dargestellt, so dass ein Schnitt durch den schräg zur Schnittebene verlaufenden Rastvorsprung 25a eine elliptische Form aufweist. Der Rastvorsprung 25a liegt in der gezeigten Montageposition des Umlenkbeschlags 1 an der Unterkante der Ausstellung 3 in Höhe des unteren Montageschlitzes 9 an. Unterhalb des Rastvorsprungs 25a ist an den Bügelschenkel 15a die Einführschräge 27a durch Biegen angeformt. Die Einführschräge 27a verläuft schräg zur Schnittebene, so dass sie in Fig. 3 mit einer elliptischen Form gezeigt ist. Neben der Funktion als Einführhilfe erfüllt die Einführschräge 27a auch die Funktion einer Abstützung des Umlenkbeschlags 1 an der Trägerwand 5, so dass ein kippsicherer Halt der Bügelschlaufe in einem rechten Winkel zu der Ebene der Trägerwand 5 gewährleistet ist.

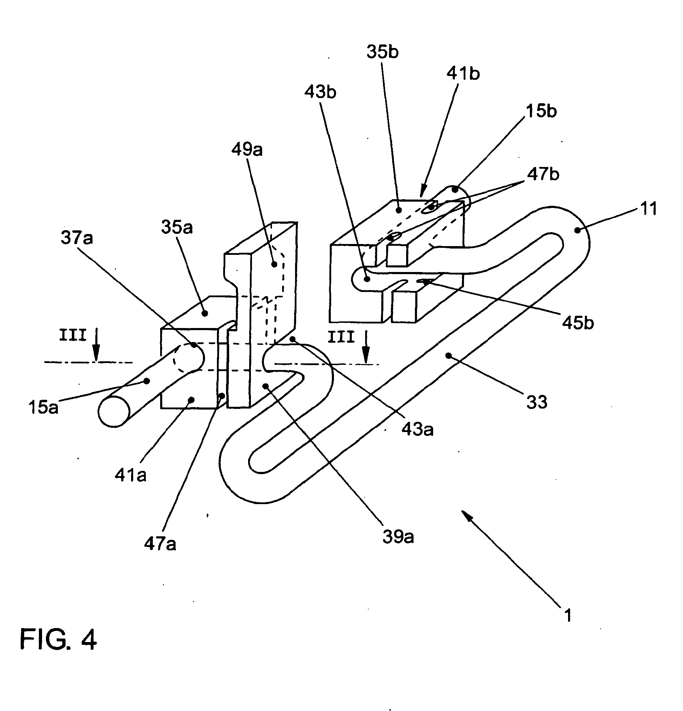

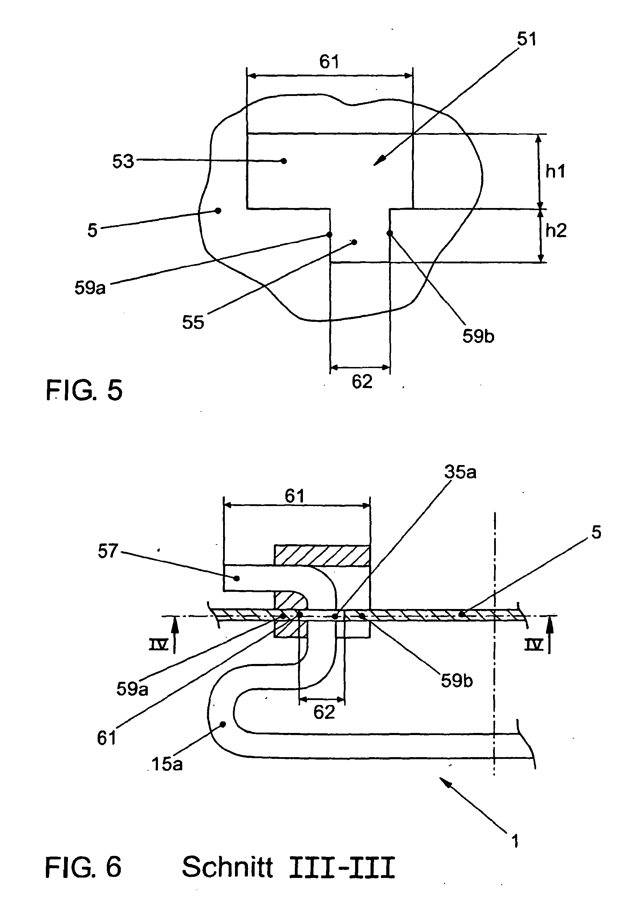

In Fig. 4 ist eine zweite Ausführungsform mit einem Umlenkbeschlag 1 und zwei Kulissensteinen 35a und 35b in einem vormontierten Zustand gezeigt. Die Kulissensteine 35a und 35b dienen zum lagerichtigen Halten der die Trägerwand 5 (Fig. 5) hintergreifenden Bügelschenkel 15a, 15b des Umlenkbeschlags 1. In der dargestellten beispielhaft ausgestalteten zweiten Ausführungsform besitzen die Kulissensteine 35a, 35b eine würfelförmige Grundgestalt. Die Kulissensteine 35a, 35b sind aus einem den funktionsgemäßen Festigkeitsanforderungen genügenden Kunststoff hergestellt. Jeder Kulissenstein 35a, 35b weist eine Haltebuchse 37a, 37b auf. Die Haltebuchsen 37a, 37b dienen zur Aufnahme der Endabschnitte der Bügelschenkel 15a, 15b des Umlenkbeschlags 1. Jede Haltebuchse 37a, 37b weist im wesentlichen einen kreisförmigen Kanalquerschnitt auf, dessen Durchmesser dem Durchmesser des Drahtquerschnittes des Umlenkbeschlags 1 entspricht. Die durch die Haltebuchsen 37a, 37b gebildeten Kreisquerschnittskanäle verlaufen in den würfelförmigen Haltebuchsen 37a, 37b in einem 90°-Winkel von jeweils einer vorderen Stirnfläche 39a, 39b zu einer seitlichen Stirnfläche 41a, 41b. In den Haltebuchsen 37a, 37b sind die Endabschnitte der Bügelschenkel 15a, 15b geführt. Um die würfelförmigen Haltebuchsen 37a, 37b an den Endabschnitten der Bügelschenkel 15a, 15b vormontieren zu können, sind die von den Stirnflächen 41a, 41b abgehenden Kanalabschnitte 43a, 43b als einseitig offene Freisparungen ausgebildet. Über diese einseitig offenen Kanalabschnitte 43a, 43b werden die Endabschnitten der Bügelschenkel 15a, 15b in die Kulissensteine 35a, 35b eingesteckt, bis die kreisquerschnittsförmigen Bügelschenkel 15a, 15b hinter Haltenasen 45a, 45b verrasten. Die Haltenasen 45a, 45b sind einteilig an die Kulissenstein 35a, 35b angeformt. Die Haltenasen 45a, 45b fixieren die Kulissensteine 35a, 35b an dem Umlenkbeschlag 1 in einer vormontierten Position, so dass die Kulissensteine 35a, 35b während des eigentlichen Montagevorgangs an der Trägerwand 5 gegen Verlieren gesichert sind. Die Kulissensteine 35a, 35b weisen jeweils zwei gegenüberliegende Haltenuten 47a, 47b auf. Die Haltenuten 47a, 47b sind als gerade verlaufende Rillen ausgebildet, deren Nutbreite der Blechdicke der Trägerwand 5 entsprechen und eine Tiefe aufweisen, die einen ausreichend festen Halt der Kulissensteine 35a, 35b an einer Montageöffnung 51 der Trägerwand 5 sicherstellen. Für eine Sicherung gegen Lösen der Kulissensteine 35a, 35b aus der Trägerwand 5 sind Federzungen 49a, 49b an den Kulissensteine 35a, 35b vorgesehen. Die Federzungen 49a, 49b sind in dem dargestellten Beispiel direkt an die Kulissensteine 35a, 35b angeformt.

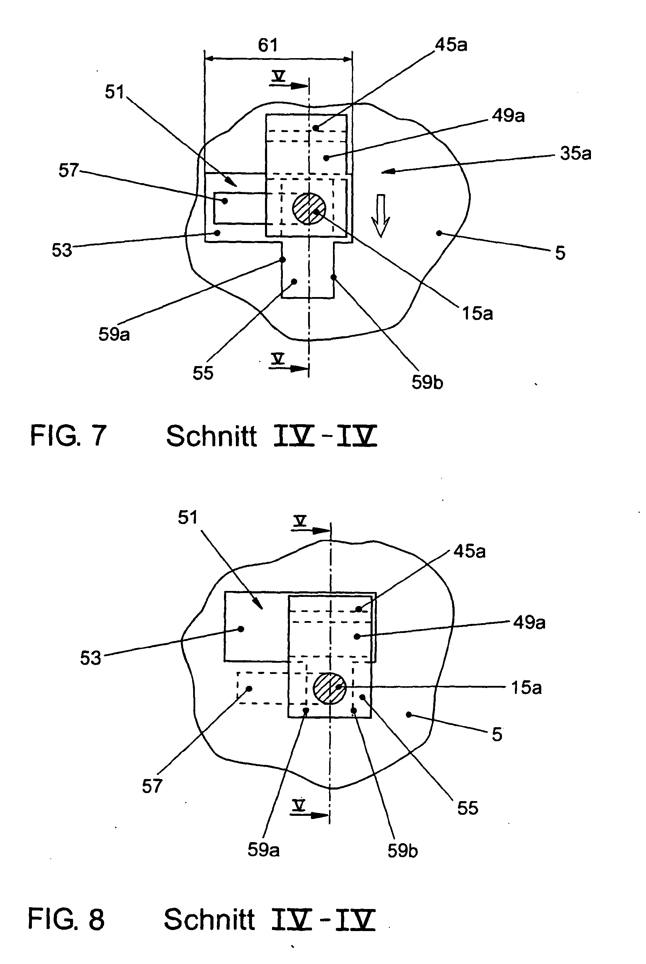

In Fig. 5 ist eine Montageöffnung 51 für die Aufnahme eines der Kulissensteine 35a, 35b in der Trägerwand 5 gezeigt. Für jeden Kulissenstein 35a, 35b ist folglich eine gesonderte Montageöffnung 51 in der Trägerwand 5, wie in Fig. 5 dargestellt, erforderlich. Die Montageöffnung 51 besteht aus einem ersten Teilausschnitt 53, der sich unmittelbar an einen zweiten Teilausschnitt 55 anschließt. Die beiden Teilausschnitte 53 und 55 bilden die gemeinsame Montageöffnung 51. Der erste Teilausschnitt 53 weist eine Höhe h1 auf, die der Höhe des Kulissensteins 35a, 35b entspricht. Die Mindestbreite b1 des ersten Teilausschnitts 53 ergibt sich aus der Breite des Kulissensteins 35a, 35b zusammen mit einem überstehenden Endstück 57 des Bügelschenkels 15a, 15b. Das Endstück 57 zusammen mit der Mindestbreite b1 sind in Fig. 6 gezeigt. Über den ersten Teilausschnitt 53 wird der Kulissenstein 35a, 35b senkrecht zur Ebene der Trägerwand 5 in die Montageöffnung 51 eingeführt. In der in den ersten Teilausschnitt 53 eingeführten Lage befindet sich der Kulissenstein 35a, 35b in seiner Einführposition gemäß Fig. 7. Der zweite Teilausschnitt 55 weist eine Höhe h2 auf, die der Höhe h1 entsprechen kann. Die Breite b2 des zweiten Teilausschnitts 55 ist deutlich geringer als die Mindestbreite b1 des ersten Teilausschnitts 53. Die Breite b2 des zweiten Teilausschnitts 55 entspricht dem Abstand der Nutengrunde 61 der Haltenuten 47a, 47b in den Kulissensteinen 35a, 35b, wie in Fig. 6 dargestellt. Zwei gegenüberliegende Randabschnitte 59a, 59b des zweiten Teilausschnitts 55 begrenzen dabei die Breite b2 des zweiten Teilausschnitts 55. An den Randabschnitten 59a, 59b, die in die Haltenuten 47a, 47b der Kulissensteine 35a, 35b eingreifen, sind die Kulissensteirie 35a, 35b an der Trägerwänd 5 gehalten. In der Lage der Kulissensteine 35a, 35b in dem zweiten Teilausschnitt 55 befinden sich die Kulissensteine 35a, 35b in der entgültigen Montageposition, wie in Fig. 8 dargestellt.

In der Fig. 6 ist einer der Kulissensteine 35a, 35b in seiner Montageposition, wie auch in Fig. 8 dargestellt, gezeigt. Die Fig. 6 zeigt einen Halbschnitt des Umlenkbeschlags 1 in der Montageposition. Der eine Bügelschenkel 15a ist in den Kulissenstein 35a eingesetzt und der Kulissenstein 35a ist über seine Haltenuten 47a an den Randabschnitten 59a, 59b des zweiten Teilausschnitts 55 der Montageöffnung 51 an der Trägerwand 5 gehalten. Das überstehende Endstück 57 des Bügelschenkels 15a hintergreift dabei die Trägerwand 5 in der Montageposition.

Das Verfahren zum Befestigen eines Umlenkbeschlags 1 mittels Kulissensteinen 35a, 35b ist anhand der Fig. 7 bis 10 beispielhaft an der Befestigung eines Kulissensteins 35a an einer Montageöffnung 51 der Trägerwand 5 beschrieben.

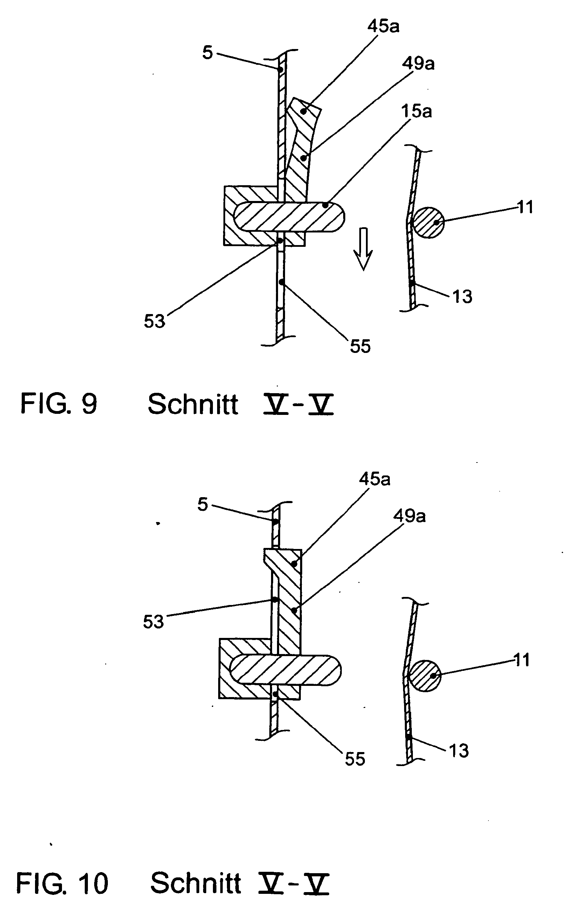

In Fig. 7 ist die Einführposition des Kulissensteins 35a in einer Querschnittansicht entlang der Linie IV-IV aus der Fig. 6 dargestellt. Darin ist ein Ausschnitt aus der Trägerwand 5 gezeigt, der die Montageöffnung 51 gemäß Fig. 5 aufweist. Der Kulissenstein 35a ist auf den Bügelschenkel 15a des Umlenkbeschlags 1 gemäß Fig. 4 aufgesteckt und in den ersten Teilausschnitt 53 eingeführt. Der Bügelschenkel 15a ist dabei im Querschnitt und das im Hintergrund liegende überstehende Endstück 57 in der Draufsicht dargestellt. Der Kulissenstein 35a wird in seiner auf dem Bügelschenkel 15a vormontierten Lage senkrecht zur Ebene der Trägerwand 5 in den ersten Teilausschnitt 53 der Montageöffnung 51 in der Trägerwand 5 eingeführt. Die vormontierten Lagen der Kulissensteine 35a, 35b sind in Fig. 4 gezeigt. In der Draufsicht gemäß Fig. 7 ist zu erkennen, dass die Breite b1 des ersten Teilausschnitts 53 geringfügig größer als die Breite des Kulissensteins 35a zusammen mit dem überstehenden Endstück 57 des Bügelschenkels 15a ist. Der Kulissenstein 35a wird in den ersten Teilausschnitt 53 eingeführt, bis die Federzunge 49a und die Haltenase 45a, wie in Fig. 9 dargestellt sich in einer vorgespannten Lage befinden, in der die Haltenuten 47a, 47b des Kulissensteins 35a mit den Randabschnitten 59a und 59b des zweiten Teilausschnitts 55 fluchten. Aus dieser Einführposition wird der Kulissenstein 35a in Pfeilrichtung nach unten aus dem ersten Teilausschnitt 53 heraus in den zweiten Teilausschnitt 55 hineingeschoben, bis die Haltenuten 47a, 47b des Kulissensteins 35a vollständig an den Randabschnitten 59a und 59b aufsitzen. Der Kulissenstein 35a befindet sich dann in der entgültigen Montageposition, wie in Fig. 8 dargestellt. In dieser Montageposition hintergreift das überstehenden Endstück 57 des Bügelschenkels 15a des Umlenkbeschlags 1 die Trägerwand 5 seitlich des zweiten Teilausschnitts 55.

In den Fig. 9 und 10 in jeweils eine Querschnittansicht entlang der Linie V-V aus der Fig. 7 bzw. der Fig. 8 gezeigt, in welcher ein Rastvorsprung 45a mit der Federzunge 49a in der Einführposition und der Montageposition des Kulissensteins dargestellt ist.

Wie bereits erwähnt ist der Kulissenstein 35a wie in Fig. 7 gezeigt in den ersten Teilausschnitt 53 eingeführt, so dass die Federzunge 49a und die Haltenase 45a, wie in Fig. 9 dargestellt sich in einer vorgespannten Lage an der Trägerwand 5 befinden, in der die Haltenuten 47a, 47b des Kulissensteins 35a mit den Randabschnitten 59a und 59b des zweiten Teilausschnitts 55 fluchten. Aus dieser Einführposition wird der Kulissenstein 35a in Pfeilrichtung nach unten aus dem ersten Teilausschnitt 53 heraus in den zweiten Teilausschnitt 55 hineingeschoben, bis die Haltenuten 47a, 47b des Kulissensteins 35a, wie in Fig. 8 und Fig. 10 dargestellt vollständig an den Randabschnitten 59a und 59b aufsitzen. Fig. 10 zeigt, wie die Haltenase 45a in der entgültigen Montageposition an der Trägerwand 5 verrastet ist. Die Federzunge 49a befindet sich dabei in einer entspannten Ruhestellung. Die Haltenase 45a ist dabei mit einer Kante der Montageöffnung 51 der Trägerwand 5 in Anlage. So ist eine Bewegung des Kulissensteins 35a nach oben verhindert und der Kulissenstein 35a kann sich nicht mehr von der Trägerwand 5 lösen. Mit den verrasteten Kulissensteinen 35a, 35b ist der Umlenkbeschlag 1 nach der zweiten Ausführungsform zuverlässig an der Trägerwand 5 befestigt.

### Bezugszeichenliste

- 1: Umlenkbeschlag
- 3: Ausstellung
- 5: Trägerwand
- 7: oberer Montageschlitz
- 9: unterer Montageschlitz
- 11: Bügelschlaufe
- 13: Gurtbandabschnitt
- 15a, 15b: Bügelschenkel
- 17a, 17b: 90°-Winkelabschnitte
- 19a, 19b: Federabschnitte
- 21a, 21b: Übergangsbereiche
- 23a, 23b: Biegeabschnitte
- 25a, 25b: Rastvorsprünge
- 27a, 27b: Einführschrägen
- 29a, 29b: Endabschnitte
- 31a, 31b: U-förmige Bogenabschnitte
- 33: Umlenkabschnitt
- 35a, 35b: Kulissensteine
- 37a, 37b: Haltebuchsen
- 39a, 39b: vordere Stirnflächen
- 41a, 41b: seitlichen Stirnflächen
- 43a, 43b: Kanalabschnitte
- 45a, 45b: Haltenasen
- 47a, 47b: Haltenuten
- 49a, 49b: Federzungen
- 51: Montageöffnung
- 53: Erster Teilausschnitt
- 55: Zweiter Teilausschnitt
- 57: Überstehendes Endstück
- 59a, 59b: Randabschnitte
- 61: Nutengrund

## Patentansprüche

1. Befestigungsanordnung, insbesondere zum Halten eines Umlenkbeschlags (1) für einen Gurtbandabschnitt (13) eines Sicherheitsgurtes in einem Fahrzeug, welche zumindest einen, eine Trägerwand (5) hintergreifenden Bügelschenkel (15a, 15b) aufweist, der materialeinheitlich und einstückig mit dem Umlenkbeschlag (1) ausgebildet ist, wobei der Umlenkbeschlag (1) als offene Bügelschlaufe (11) mit zwei die Trägerwand (5) hintergreifenden Bügelschenkeln (15a, 15b) ausgebildet ist, **dadurch gekennzeichnet, dass** an jedem der Bügelschenkel (15a, 15b) jeweils ein Federabschnitt (19a, 19b), durch den die Bügelschenkel (15a, 15b) in einer die Trägerwand (5) hintergreifenden Montageposition gegen Lösen gesichert sind, vorgesehen ist, und jeder Federabschnitt (19a, 19b) einen sich an der Trägerwand (5) abstützenden Rastvorsprung (25a, 25b) trägt.

2. Befestigungsanordnung nach Anspruch 1, **dadurch gekennzeichnet, dass** die Rastvorsprünge (25a, 25b) einteilig mit dem Umlenkbeschlag (1) ausgebildet sind.

3. Befestigungsanordnung nach Anspruch 2, **dadurch gekennzeichnet, dass** die Rastvorsprünge (25a, 25b) als Biegeabschnitten des Bügelschenkels (15a, 15b) ausgebildet sind.

4. Befestigungsanordnung nach Anspruch 3, **dadurch gekennzeichnet, dass** die Rastvorsprünge (25a, 25b) zwei gegenüberliegende voneinander weg weisende Biegeabschnitte des Bügelschenkels (15a, 15b) sind.

5. Befestigungsanordnung nach Anspruch 3 oder 4, **dadurch gekennzeichnet, dass** die Rastvorsprünge (25a, 25b) des Bügelschenkels (15a, 15b) Einführschrägen (27a, 27b) zum Einführen der Rastvorsprünge (25a, 25b) in einen Montageschlitz (7, 9) der Trägerwand (5) aufweisen.

6. Befestigungsanordnung nach einem der vorhergehenden Ansprüche, **dadurch gekennzeichnet, dass** der Umlenkbeschlag ein Drahtbiegeteil ist.

7. Befestigungsanordnung nach Anspruch 1, **dadurch gekennzeichnet, dass** die Rastvorsprünge (25a, 25b) zweiteilig mit dem Umlenkbeschlag (1) ausgebildet sind.

8. Befestigungsanordnüng nach Anspruch 7, **dadurch gekennzeichnet, dass** die Rastvorsprünge (25a, 25b) an Kulissensteinen (35a, 35b) vorgesehen sind und jeweils ein Kulissenstein (35a, 35b) an einem der Bügelschenkel (15a, 15b) des Umlenkbeschlags (1) gehalten ist.

9. Befestigungsanordnung nach Anspruch 8, **dadurch gekennzeichnet, dass** die Rastvorsprünge (25a, 25b) über die Federabschnitte (19a, 19b) bildende Federzungen (49a, 49b) mit den Kulissensteinen (35a, 35b) verbunden sind.

10. Befestigungsanordnung nach Anspruch 9, **dadurch gekennzeichnet, dass** ein Rastvorsprung (25a, 25b) zusammen mit einer Federzunge (49a, 49b) und einem Kulissenstein (35a, 35b) als einteiliges Kunststoffteil ausgebildet ist.

11. Befestigungsanordnung nach einem der Ansprüche 8 bis 10, **dadurch gekennzeichnet, dass** der Kulissenstein (35a, 35b) zu seiner Halterung an dem Bügelschenkel (15a, 15b) des Umlenkbeschlags (1) eine Haltebuchse (37a, 37b) aufweist, welche zum Einstecken eines Bügelschenkels (15a, 15b) des Umlenkbeschlags (1) ausgebildet ist.

12. Befestigungsanordnung nach einem der Ansprüche 8 bis 10, **dadurch gekennzeichnet, dass** der Kulissenstein (35a, 35b) Haltenuten (47a, 47b) zum Eingreifen von Randabschnitten (59a, 59b) einer Montageöffnung (51) der Trägerwand (5) in einer Montageposition des Umlenkbeschlags (1) aufweist.

13. Befestigungsanordnung nach Anspruch 12, **dadurch gekennzeichnet, dass** die Montageöffnung (51) einen ersten Teilausschnitt (53) aufweist, durch den der Kulissenstein (35a, 35b) zusammen mit dem hintergreifenden Bügelschenkel (15a, 15b) des Umlenkbeschlags (1) einführbar ist und einen zweiten Teilausschnitt (55) aufweist, an dessen Randabschnitte (59a, 59b) der Kulissenstein (35a, 35b) in einer Montageposition des Umlenkbeschlags (1) gehalten ist, in welcher Montageposition der Bügelschenkel (15a, 15b) des Umlenkbeschlags (1) die Trägerwand (5) hintergreift.

14. Befestigungsanordnung nach Anspruch 13, **dadurch gekennzeichnet, dass** der erste Teilausschnitt (53) eine Form aufweist, deren Höhe (h1) mindestens dem Kulissenstein (35a, 35b) entspricht und deren Breite (b1) mindestens die Breite des Kulissensteins (35a, 35b), insbesondere zusammen mit einem überstehenden Endstück (57) des Bügelschenkels (15a, 15b) aufweist, und der zweite Teilausschnitt (55), der unmittelbar an den ersten Teilausschnitt (53) anschließt, eine Form aufweist, deren Breite (b2) an den Nutengrund (61) der Haltenuten (47a, 47b) des Kulissensteins (35a, 35b) angepasst ist.

15. Verfahren zum Befestigen eines Umlenkbeschlags an einer Trägerwand, mit einer Befestigungsanordnung nach einem der Ansprüche 1 bis 6, in welchem Verfahren eine Ausstellung (3) in einer Trägerwand hergestellt wird, anschließend Biegeabschnitte (23a, 23b) von Bügelschenkeln (15a, 15b) eines Umlenkbeschlags (1) in einen durch die Ausstellung (3) gebildeten Montageschlitz (7, 9) der Trägerwand (5) eingeführt werden, so dass Federabschnitte (19a, 19b) der Bügelschenkel (15a, 15b) in eine Lage ausgelenkt werden, in der Rastvorsprünge (25a, 25b) des Umlenkbeschlags (1) in die Ausstellung einzuschieben sind, bis die Rastvorsprünge (25a, 25b) an der Ausstellung (3) in einer Montageposition verrasten.

16. Verfahren zum Befestigen eines Umlenkbeschlags (1) an einer Trägerwand (5), mit einer Befestigungsanordnung nach einem der Ansprüche 7 bis 14, in welchem Verfahren zwei Montageöffnungen (51) mit jeweils einem ersten Teilausschnitt (53) und einem unmittelbar daran angrenzenden zweiten Teilausschnitt (55) in der Trägerwand (5) hergestellt werden, und jeweils ein Kulissenstein (35a, 35b) an zwei Bügelschenkel (15a, 15b) des Umlenkbeschlags (1) aufgesteckt werden, dann die Kulissensteine (35a, 35b) in die ersten Teilausschnitte (53) der zwei Montageöffnungen (51) eingeführt werden und anschließend die Kulissensteine (35a, 35b) aus dieser Einführposition an den ersten Teilausschnitten (53) in die Montageposition an den zweiten Teilausschnitten (55) geschoben werden, bis Randabschnitte der zweiten Teilausschnitte (55) in Haltenuten (47a, 47b) der Kulissensteine (35a, 35b) eingreifen und Rastvorsprünge (25a, 25b) der Kulissensteine (35a, 35b) mittels Federzungen (49a, 49b) an der Trägerwand (5) verrasten.

## Claims

1. Fastening arrangement, in particular for holding a deflection fitting (1) for a belt strap section (13) of a seatbelt in a vehicle, which comprises at least one shackle leg (15a, 15b) which rearwardly engages a carrier wall (5) and which is formed in a material-uniform manner and in one piece with the deflection fitting (1), wherein the deflection fitting (1) is designed as an open shackle loop (11) having two shackle legs (15a, 15b) rearwardly engaging the carrier wall (5), **characterized in that** there is provided on each of the shackle legs (15a, 15b) a respective spring section (19a, 19b) by means of which the shackle legs (15a, 15b) are secured against release in a mounting position rearwardly engaging the carrier wall (5), and each spring section (19a, 19b) bears a latching projection (25a, 25b) supported on the carrier wall (5).

2. Fastening arrangement according to Claim 1, **characterized in that** the latching projections (25a, 25b) are formed in one part with the deflection fitting (1).

3. Fastening arrangement according to Claim 2, **characterized in that** the latching projections (25a, 25b) are formed as bent sections of the shackle leg (15a, 15b).

4. Fastening arrangement according to Claim 3, **characterized in that** the latching projections (25a, 25b) are two opposite bent sections of the shackle leg (15a, 15b) which are directed away from one another.

5. Fastening arrangement according to Claim 3 or 4, **characterized in that** the latching projections (25a, 25b) of the shackle leg (15a, 15b) have lead-in inclinations (27a, 27b) for introducing the latching projections (25a, 25b) into a mounting slot (7, 9) in the carrier wall (5).

6. Fastening arrangement according to one of the preceding claims, **characterized in that** the deflection fitting is a bent wire part.

7. Fastening arrangement according to Claim 1, **characterized in that** the latching projections (25a, 25b) are formed in two parts with the deflection fitting (1).

8. Fastening arrangement according to Claim 7, **characterized in that** the latching projections (25a, 25b) are provided on sliding blocks (35a, 35b) and in each case a sliding block (35a, 35b) is held on one of the shackle legs (15a, 15b) of the deflection fitting (1).

9. Fastening arrangement according to Claim 8, **characterized in that** the latching projections (25a, 25b) are connected to the sliding blocks (35a, 35b) via spring tongues (49a, 49b) which form the spring sections (19a, 19b).

10. Fastening arrangement according to Claim 9, **characterized in that** a latching projection (25a, 25b), together with a spring tongue (49a, 49b) and a sliding block (35a, 35b), is formed as a one-part plastic part.

11. Fastening arrangement according to one of Claims 8 to 10, **characterized in that**, in order to hold the sliding block (35a, 35b) on the shackle leg (15a, 15b) of the deflection fitting (1), the said sliding block has a holding bush (37a, 37b) which is designed for inserting a shackle leg (15a, 15b) of the deflection fitting (1).

12. Fastening arrangement according to one of Claims 8 to 10, **characterized in that** the sliding block (35a, 35b) has holding grooves (47a, 47b) for the engagement of edge sections (59a, 59b) of a mounting opening (51) of the carrier wall (5) in a mounting position of the deflection fitting (1).

13. Fastening arrangement according to Claim 12, **characterized in that** the mounting opening (51) has a first partial cutout (53) through which the sliding block (35a, 35b), together with the rearwardly engaging shackle leg (15a, 15b) of the deflection fitting (1), can be introduced, and has a second partial cutout (55) on whose edge sections (59a, 59b) the sliding block (35a, 35b) is held in a mounting position of the deflection fitting (1), in which mounting position the shackle leg (15a, 15b) of the deflection fitting (1) rearwardly engages the carrier wall (5).

14. Fastening arrangement according to Claim 13, **characterized in that** the first partial cutout (53) has a shape whose height (h1) corresponds at least to the sliding block (35a, 35b) and whose width (b1) has at least the width of the sliding block (35a, 35b), in particular together with a projecting end piece (57) of the shackle leg (15a, 15b), and the second partial cutout (55) which directly adjoins the first partial cutout (53), has a shape whose width (b2) is adapted to the groove base (61) of the holding grooves (47a, 47b) of the sliding block (35a, 35b).

15. Method for fastening a deflection fitting to a carrier wall using a fastening arrangement according to one of Claims 1 to 6, in which method a protrusion (3) is produced in a carrier wall, then bent sections (23a, 23b) of shackle legs (15a, 15b) of a deflection fitting (1) are introduced into a mounting slot (7, 9) in the carrier wall (5) that is formed by the protrusion (3), with the result that spring sections (19a, 19b) of the shackle legs (15a, 15b) are deflected into a position in which latching projections (25a, 25b) of the deflection fitting (1) are to be inserted into the protrusion until the latching projections (25a, 25b) latch on the protrusion (3) in a mounting position.

16. Method for fastening a deflection fitting (1) to a carrier wall (5) using a fastening arrangement according to one of Claims 7 to 14, in which method two mounting openings (51) each having a first partial cutout (53) and a directly adjoining second partial cutout (55) are produced in the carrier wall (5), and in each case a sliding block (35a, 35b) is fitted onto two shackle legs (15a, 15b) of the deflection fitting (1), then the sliding blocks (35a, 35b) are introduced into the first partial cutouts (53) of the two mounting openings (51) and subsequently the sliding blocks (35a, 35b) are pushed from this introduction position on the first partial cutouts (53) into the mounting position on the second partial cutouts (55) until edge sections of the second partial cutouts (55) engage in holding grooves (47a, 47b) of the sliding blocks (35a, 35b) and latching projections (25a, 25b) of the sliding blocks (35a, 35b) latch by means of spring tongues (49a, 49b) on the carrier wall (5).

## Revendications

1. Dispositif de fixation, destiné en particulier à maintenir une armature de renvoi (1) pour une partie de sangle (13) d'une ceinture de sécurité dans un véhicule, lequel présente au moins une branche de bride (15a, 15b) saisissant à l'arrière une paroi support (5), laquelle branche de bride est conçue de façon homogène au niveau du matériau et d'un seul tenant avec l'armature de renvoi (1), l'armature de renvoi (1) étant conçue sous forme de boucle à bride (11) ouverte avec deux branches de bride (15a, 15b) saisissant à l'arrière la paroi support (5), **caractérisé en ce qu'**à chaque fois une partie à ressort (19a, 19b), par laquelle les branches de bride (15a, 15b) sont protégées contre le détachement dans une position de montage saisissant à l'arrière la paroi support (5), est prévue sur chacune des branches de bride (15a, 15b), et chaque partie à ressort (19a, 19b) porte une saillie d'encliquetage (25a, 25b) s'appuyant sur la paroi support (5).

2. Dispositif de fixation selon la revendication 1, **caractérisé en ce que** les saillies d'encliquetage (25a, 25b) sont conçues d'un seul tenant avec l'armature de renvoi (1).

3. Dispositif de fixation selon la revendication 2, **caractérisé en ce que** les saillies d'encliquetage (25a, 25b) sont conçues sous forme de parties de flexion de la branche de bride (15a, 15b).

4. Dispositif de fixation selon la revendication 3, **caractérisé en ce que** les saillies d'encliquetage (25a, 25b) sont deux parties de flexion opposées s'éloignant l'une de l'autre de la branche de bride (15a, 15b).

5. Dispositif de fixation selon la revendication 3 ou 4, **caractérisé en ce que** les saillies d'encliquetage (25a, 25b) de la branche de bride (15a, 15b) présentent des chanfreins d'entrée (27a, 27b) pour l'introduction des saillies d'encliquetage (25a, 25b) dans une fente de montage (7, 9) de la paroi support (5).

6. Dispositif de fixation selon l'une quelconque des revendications précédentes, **caractérisé en ce que** l'armature de renvoi est une partie de flexion en fil métallique.

7. Dispositif de fixation selon la revendication 1, **caractérisé en ce que** les saillies d'encliquetage (25a, 25b) sont conçues en deux parties avec l'armature de renvoi (1).

8. Dispositif de fixation selon la revendication 7, **caractérisé en ce que** les saillies d'encliquetage (25a, 25b) sont prévues sur des coulisseaux (35a, 35b) et à chaque fois un coulisseau (35a, 35b) est maintenu sur l'une des branches de bride (15a, 15b) de l'armature de renvoi (1).

9. Dispositif de fixation selon la revendication 8, **caractérisé en ce que** les saillies d'encliquetage (25a, 25b) sont reliées aux coulisseaux (35a, 35b) par des lames de ressort (49a, 49b) formant les parties à ressort (19a, 19b).

10. Dispositif de fixation selon la revendication 9, **caractérisé en ce qu'**une saillie d'encliquetage (25a, 25b) est formée conjointement avec une lame de ressort (49a, 49b) et un coulisseau (35a, 35b) sous forme de partie plastique d'un seul tenant.

11. Dispositif de fixation selon l'une quelconque des revendications 8 à 10, **caractérisé en ce que** le coulisseau (35a, 35b) présente pour son maintien sur la branche de bride (15a, 15b) de l'armature de renvoi (1) un manchon de maintien (37a, 37b), qui est formé pour l'emboîtement d'une branche de bride (15a, 15b) de l'armature de renvoi (1).

12. Dispositif de fixation selon l'une quelconque des revendications 8 à 10, **caractérisé en ce que** le coulisseau (35a, 35b) présente des rainures de retenue (47a, 47b) pour l'engagement de parties de bordure (59a, 59b) d'une ouverture de montage (51) de la paroi support (5) dans une position de montage de l'armature de renvoi (1).

13. Dispositif de fixation selon la revendication 12, **caractérisé en ce que** l'ouverture de montage (51) présente une première découpe partielle (53), par laquelle le coulisseau (35a, 35b) peut être introduit conjointement avec la branche de bride (15a, 15b) s'engageant par l'arrière de l'armature de renvoi (1) et présente une seconde découpe partielle (55), sur les parties de bordure (59a, 59b) de laquelle le coulisseau (35a, 35b) est maintenu dans une position de montage de l'armature de renvoi (1), position de montage dans laquelle la branche de bride (15a, 15b) de l'armature de renvoi (1) saisit à l'arrière la paroi support (5).

14. Dispositif de fixation selon la revendication 13, **caractérisé en ce que** la première découpe partielle (53) présente une forme dont la hauteur (h1) correspond au moins au coulisseau (35a, 35b) et dont la largeur (b1) présente au moins la largeur du coulisseau (35a, 35b), en particulier conjointement avec une pièce d'extrémité (57) dépassant de la branche de bride (15a, 15b), et la seconde découpe partielle (55), qui fait suite directement à la première découpe partielle (53), présente une forme dont la largeur (b2) est adaptée au fond de rainure (61) des rainures de retenue (47a, 47b) du coulisseau (35a, 35b).

15. Procédé pour la fixation d'une armature de renvoi sur une paroi support, comprenant un dispositif de fixation selon l'une quelconque des revendications 1 à 6, procédé dans lequel une partie saillante (3) est établie dans une paroi support, des parties de flexion (23a, 23b) de branches de bride (15a, 15b) d'une armature de renvoi (1) étant introduites ensuite dans une fente de montage (7, 9), formée par la partie saillante (3), de la paroi support (5), de sorte que des parties à ressort (19a, 19b) des branches de bride (15a, 15b) sont déviées dans une position dans laquelle des saillies d'encliquetage (25a, 25b) de l'armature de renvoi (1) doivent être introduites dans la partie saillante, jusqu'à ce que les saillies d'encliquetage (25a, 25b) s'enclenchent sur la partie saillante (3) dans une position de montage.

16. Procédé pour fixer une armature de renvoi (1) sur une paroi support (5), comprenant un dispositif de fixation selon l'une quelconque des revendications 7 à 14, procédé dans lequel deux ouvertures de montage (51) sont fabriquées avec respectivement une première découpe partielle (53) et une seconde découpe partielle (55) immédiatement contiguë à la première dans la paroi support (5), et à chaque fois un coulisseau (35a, 35b) est emboîté sur chacune de deux branches de bride (15a, 15b) de l'armature de renvoi (1), les coulisseaux (35a, 35b) sont introduits ensuite dans les premières découpes partielles (53) des deux ouvertures de montage (51) et les coulisseaux (35a, 35b) sont poussés ensuite de cette position d'introduction sur les premières découpes partielles (53) dans la position de montage sur les secondes découpes partielles (55), jusqu'à ce que des parties de bordure des secondes découpes partielles (55) s'engagent dans des rainures de retenue (47a, 47b) des coulisseaux (35a, 35b) et des saillies d'encliquetage (25a, 25b) des coulisseaux (35a, 35b) s'enclenchent au moyen de lames de ressort (49a, 49b) sur la paroi support (5).
